# EUROPEAN PATENT APPLICATION

(11) **EP 1 101 907 A1**
(43) Date of publication of application: **23.05.2001**
(21) Application number: 99309220.4
(22) Date of filing: 19.11.1999
(51) Int. Cl.: F01N 3/027, F01N 3/031, F01N 3/032, F01N 3/20, F01N 3/08, F01N 3/28, B01D 39/20, B01D 46/24, B01D 53/94

(54) **Exhaust gas emission-control system**

(71) Applicant: ISUZU CERAMICS RESEARCH INSTITUTE CO., LTD., Fujisawa-shi, Kanagawa-ken (JP)
(72) Inventor: Kawamura, Hideo, Kouza-gun, Kanagawa-ken 253-0105 (JP)
(74) Representative: Jenkins, Peter David

(57) **Abstract**

An exhaust gas emission-control system is disclosed, wherein exhaust gases are alternately passed through either one of a pair of first filters(1,2), which comes selectively in fluid communication with an exhaust pipe with operation of a change-over valve(21). Particulate emissions in the exhaust gases are effectively trapped in the first filters(1,2) and burned away. Then, the exhaust gases are passed through a downstream second filter(3), where nitrogen oxides (NOx) in the exhaust gases are decomposed. By-pass valves(19,23) downstream of the first filters (1,2) are actuated to discharge a gas evolved by burning the trapped particulate emissions on regeneration of the first filters(1,2) into the air. Thus, no gas caused by burning the trapped particulate emissions in the first filters(1,2) may pass through the second filter(3). The second filter(3) is enveloped with a warm-up gas jacket(16,33) through which the exhaust gases flow to keep the second filter (3) at a temperature that is optimal to render a catalytic compound of brownmillerite-like structure effective in decomposition of nitrogen oxides (NOx) contained in the exhaust gases.

## Description

The present invention relates to an exhaust gas emission-control system in which exhaust gases from a Diesel engine are first passed through an upstream filter, where particulate emissions, or particulate matter, are extracted from the exhaust stream and they are burned, and then passed through a downstream filter, where nitrogen oxides (NOx) are decomposed into harmless emission.

To control particulate emissions contained in exhaust gases from the Diesel engines, a particulate trap filter system is conventionally known, in which a pair of filter media is arranged in an exhaust line in parallel with each other and exhaust gases from the Diesel engine are passed alternately through either one of the filter media. Once any filter medium is saturated with the particulate matter extracted out of the exhaust, the stream of the exhaust gases is switched over to another filter medium, which starts trapping particulate matter. At the same time, the filter medium saturated with the particulate matter is regenerated by heating to burn away the particulate trapped thereon. The particulate trap filter systems of the type described just above are disclosed in, for example, Japanese Patent Laid-Open Nos. 279646/1995 and 312329/1996.

Moreover, filter media having catalysts to decompose nitrogen oxides (NOx) in the exhaust gases are disclosed in, for example, Japanese Patent Laid-Open Nos. 217618/1997 and 215921/1997.

Meanwhile, as will be seen to those skilled in the art, exhaust gases from the Diesel engines contains particulate emissions and nitrogen oxides (NOx), each of which is a pollutant. In recent years much attention has been given to the removal of those harmful pollutants from the exhaust gases of the Diesel engines. In order to extract both the particulate emissions and nitrogen oxides (NOx) from the exhaust gases, an exhaust gas purifier will be conceived, which is comprised of a first filter for trapping the particulate emissions out of the exhaust and burning the trapped particulate, and a second filter for decomposing nitrogen oxides (NOx), the first and second filters being connected in series.

As well-known to those skilled in the art, the particulate emissions are mainly composed of carbon particles and hydrocarbons (HC), sulfur oxides (SOx) and others adhering around the carbon particles and, thus, they may be trapped with a filter of fibers entangled randomly when the exhaust gases are passed through the filter. On the other hand, it has been known to decompose nitrogen oxides (NOx) in the exhaust gases by passing the exhaust through the filter having a catalyst to reduce nitrogen oxides (NOx) to harmless nitrogen gas. In many cases, however, any other substance such as fuels or the like is required as a reducing agent.

A primary aim of the present invention is to overcome the problems on the prior art as having been described above, and in particular to provide an exhaust gas emission-control system comprising a pair of first filters arranged in an exhaust passage in parallel with each other to trap particulate emissions composed of carbons, smokes, hydrocarbons (HC), sulfur oxides (SOx) and others and burn away the trapped particulate emissions, and a second filter arranged downstream of the first filters to reduce nitrogen oxides (NOx) with a catalyst in the second filter, thereby eliminating not only particulate emissions composed of carbons, smokes, hydrocarbons (HC), sulfur oxides (SOx) and others but also nitrogen oxides (NOx) from the exhaust gases. Moreover, the present invention provides an exhaust gas emission-control system wherein sulfur oxides (SOx) originating in sulfur contained in fuel and evolved by burning the trapped particulate emissions are not allowed to pass through a second filter, where nitrogen oxides are decomposed with a catalytic compound of brownmillerite-like structure that might be otherwise rendered ineffective by sulfur oxides (SOx), so that the second filter is improved in durability. The present invention further provides an exhaust gas emission-control system in which the second filter may be kept at a temperature that is optimal to render the catalyst effective in decomposition of nitrogen oxides (NOx).

The present invention is concerned with an exhaust gas emission-control system comprising: a pair of first filters incorporated in an exhaust passage of a diesel engine in parallel with each other to extract particulate matter; heating means provided in the first filters to burn the particulate matter trapped in the first filters; a change-over valve to allow the exhaust gases to pass through selectively either one of the first filters; by-pass valves arranged in egress ports of the first filters, one to each egress port, to discharge a gas caused by burning the trapped particulate matter to regenerate the first filters; a second filter to decompose therein nitrogen oxides (NOx) in the exhaust gases, which is communicated with an exhaust passage where the egress ports of the first filters merge into a single flow of the exhaust gases; and means for controlling operations of the change-over valve, heating means and by-pass valves in accordance with amounts of the trapped particulate matter in the first filters.

In accordance with the exhaust gas emission-control system of the present invention, the gas caused by burning the trapped particulate matter in the first filters by the heating means to regenerate the first filters is not allowed to pass through the second filter, but discharged into the air by means of the by-pass valves.

In the exhaust gas emission-control system, as described above, the second filter having the catalyst to decompose nitrogen oxides (NOx), although being arranged downstream of the first filters extracting the particulate emissions, is isolated from the gas evolved by burning the trapped particulate emissions in the first filters to regenerate the first filters, so that the catalyst to decompose nitrogen oxides (NOx) is kept against deterioration resulting from sulfur oxides (SOx). Moreover, the second filter is designed warmed up with the exhaust gases so that the catalyst may continue to decompose nitrogen oxides (NOx) at most effective condition.

In another aspect of the present invention, an exhaust gas emission-control system is provided in which the second filter is enveloped with a warm-up gas jacket that is communicated with a warm-up gas passage branching off from an exhaust gas outlet pipe at an egress of the second filter.

In another aspect of the present invention, an exhaust gas emission control system is provided, in which warm-up valves are provided nearby the branching of the warm-up gas passage to control a flow of the exhaust gases to the warm-up gas jacket in accordance with the control means. The warm-up valves are provided at ingress of the warm-up gas jacket and in the exhaust gas outlet pipe at a location downstream of the branching of the warm-up gas jacket, and the warm-up valves are operable so as to allow the exhaust gases to pass through at least either one of the warm-up gas jacket and the exhaust gas outlet pipe.

The control means operates the warm-up valves so as to let the exhaust gases pass through the exhaust gas outlet pipe when a temperature of the exhaust gases is above a preselected temperature.

In another aspect of the present invention, an exhaust gas emission-control system is provided, wherein the first filters include ceramic fibers entangled randomly. Moreover, the second filter includes coated fibers entangled randomly, the coated fibers being made of ceramic fibers that are coated with a catalytic compound of brownmillerite-like structure to compose nitrogen oxides (NOx). Examples of compound of brownmillerite-like structure to catalyze the decomposition of nitrogen oxides (NOx) include Ba₂In₂O₅, Ba₃Y₄O₅ and BaLa₂O₅.

In a further another aspect of the present invention, an exhaust gas emission-control system is provided, wherein the coated fibers each include powdery mixture of the compound of brownmillerite-like structure with any noble metal selected from Pt, Rh and the like, the mixture being applied on a thin film of vitreous composite selected from the group of Al₂O₃, Y₂O₃, SO₂, B and the like. In the coated fibers made as described just above, the presence of noble metals make the compound of brownmillerite-like structure stable in electric charge characteristic, thereby resulting in improving remarkably the durability of the catalyst. Nitrogen oxides (NOx), absorbed on the catalytic compound of brownmillerite-like structure kept at a preselected operating temperature, are chemically reduced in N₂ and O₂. At this event, N₂ and a part of O₂ are desorbed from the catalytic compound, whereas the residue of O₂ is hard to desorb from the compound. Nevertheless, the existence of noble metal such as Rh, Au, Pt, Pd, Ir and the like makes the absorbed O₂ on the compound react with hydrocarbons (HC) into H₂O and CO₂. This results in desorption of O₂ from the compound thereby providing the stability of the compound.

In another aspect of the present invention, an exhaust gas emission-control system is provided, wherein the first and second filters are composed of cylindrical filter media formed by curling fibrous laminates that have previously folded in bellows, wire nets disposed on at least any one surface of the filter media, and cylindrical cases accommodating therein the combined filter media and wire nets. In addition, the exhaust gases are passed across the filter media from a radially outwardly areas in the cylindrical case toward central area inside the filter media.

In. a further aspect of the present invention, an exhaust gas emission-control system is provided, wherein the cylindrical filter media are arranged in concentric relation with one another. Both filtration rates of particulate emissions in the first filter and of nitrogen oxides (NOx) in the second filter may be much increased by the provision of many cylindrical filter media overlapped concentrically one on the other. Now assuming that the filter media, each having the filtration rate of 20 %, are used in triple, the filtration rate of the first filter medium is 0.2, that of the second filter medium is (1-0.2) x 0.2 = 0.16, and the third filter medium is (1-0.2-0.16) x 0.2=0.128. Thus, the resultant filtration rate of the filter becomes 0.49. Further assuming that the filter media, each having the filtration rate of 30 %, are used in triple, the filtration rate of the first filter medium is 0.3, that of the second filter medium is (1-0.3) x 0.3 =0.21, and the third filter medium is (1-0.3-0.21)x 0.3 = 0.147. Thus, the resultant filtration rate of the filter becomes 0.66.

In another aspect of the present invention, an exhaust gas emission-control system is provided, wherein the wire nets arranged on the cylindrical filter media is made electric conduction by the control means to burn the trapped particulate matter on the filter media. Accordingly, the cylindrical filter media may be regenerated adequately to operate at the most optimal condition.

In accordance with the exhaust gas emission-control system constructed as described above, either one of the first filters comes selectively in fluid communication with the exhaust pipe so that the exhaust gases are alternately passed through any selected first filter, where particulate emissions are extracted from the exhaust gases. On the other hand, in another filter where no exhaust gas is passed through there, the particulate emissions accumulated on the filter media at the proceeding pass of exhaust gases are burned to regenerate the filter media for the next pass of exhaust gases. In this way, the particulate emissions may be extracted continuously from the exhaust gases. Following filtration in the first filters, the exhaust gases are passed through the second filter downstream of the first filters. In the second filter, nitrogen oxides (NOx) in the exhaust gases is catalyzed and particulate emissions are further trapped with the filter media whereby the exhaust gases may be purified before being discharged into the air. Moreover, in the exhaust gas emission-control system of the present invention, since the second filter for catalyzing therein oxides of nitrogen is isolated from the gas generated by burning the trapped particulate emissions, the catalytic compound of brownmillerite-like structure is kept from coming in contact with oxides of sulfur (SOx), which might otherwise render the catalyst ineffective or deteriorated, so that the second filter may be prolonged in acceptable service life. In addition, if the temperature is too low, the compound of brownmillerite-like structure cannot reduce oxides of nitrogen. To cope with this, the warm-up valves are provided to keep the second filter at hot temperature where nitrogen oxides (NOx) may be decomposed with the catalytic compound at the most efficient condition.

Other aims and features of the present invention will be more apparent to those skilled in the art on consideration of the accompanying drawings and following specification wherein are disclosed preferred embodiments of the invention with the understanding that such variations, modifications and elimination of parts may be made therein as fall within the scope of the appended claims without departing from the of the invention.

Embodiments of the present invention will now be described by way of example only, with reference to the accompanying drawings, in which:-
FIG. 1 is a schematic sectional illustration showing a preferred embodiment of an exhaust gas emission-control system according to the present invention:
FIG. 2 is a cross section of a second filter employed in the exhaust gas emission-control system in FIG. 1, the view being taken along the line I - I of FIG. 1:
FIG. 3 is a fragmentary enlarged sectional view illustrating a coated fiber to constitute a filter: and
FIG. 4 is a cross section of a first filter employed in the exhaust gas emission-control system in FIG. 1, the view being taken along the line II- II of FIG. 1.

Described below in detail with reference to the accompanying drawings will be preferred embodiments of an exhaust gas emission-control system according to the present invention.

The exhaust gas emission-control system is employed to purify exhaust gases from a Diesel engine by not only extracting particulate emissions of carbons, smokes, hydrocarbons (HC), sulfur oxides (SOx) and others and burning away the trapped particulate emissions but also chemically reducing nitrogen oxides (NOx) contained in the exhaust gases. The exhaust gas emission-control system is incorporated in an exhaust pipe 29 for the exhaust gases. An exhaust passage 11 connected with the exhaust pipe 29 is divided into a pair of exhaust branches 11a, 11b that are communicated to first filters 1, 2 to catch the particulate matter, which are arranged in parallel with each other with respect to the streamline of the exhaust gases. The filters 1, 2 are each provided therein with a heater 38 of an electric resistance wire netting to burn the particulate matter accumulated in filter media.

The exhaust gas emission-control system is primarily comprised of a change-over valve 21 to let the flow of exhaust gases turn toward either one of the filters 1, 2, by-pass valves 19, 23 to release gases that are caused by burning the trapped particulate matter in the filters 1, 2, and a second filter 3 to decompose nitrogen oxides (NOx) in the exhaust gases, the second filter 3 being communicated with an intermediate passage 14 at which egress ports 12, 13 of the first filters 1, 2 merge into a single flow of exhaust gases. The emission-control system further includes the heaters 38, 38 where the trapped particulate matter is burned, and a controller unit to control the actuation of the change-over valve 21, energization/deenergization of the heaters 38 and opening/closure of the by-pass valves 19, 23, depending on an amount of the trapped particulate matter in any one of the filters 1, 2.

The change-over valve 21 and by-pass valves 19, 23 are operated by their associated actuators 22, 24 according to instructions issued from the controller unit 10. On operation of the change-over valve 21 with the instruction from the controller unit 10, the exhaust gases are allowed to pass through any one, or the filter 2, of the filters 1, 2 while the particulate emissions are trapped. In this event, the by-pass valve 23 associated with the filter 2 is turned to open the egress port 13 while close an outlet 17 to release the gas resulting from burning the trapped particulate matter. Following solid-gas filtration, the exhaust gases are delivered to the second filter 3 downstream of the first filters 1, 2. At the same time, the controller unit 10 turns on any one of the heaters 38, in this instance, the heater incorporated in the filter 1, where the wire netting is heated with conduction of electric power supplied from an a-c generator 30. Thus, heating burns the trapped particulate matter in the filter 1, resulting in regenerating the filter 1. In this way, the by-pass valve 19 associated with the filter 1 closes the egress port 12 for the exhaust gases while open an outlet 17 to allow the gas to flow outside therethrough, which is caused by burning the trapped particulate matter in the filter 1. The a-c generator 30 may be of any one of a generator provided in an engine, generator associated with a turbocharger and generator mounted in means for recovery of energy from the exhaust gases.

In the exhaust gas emission-control system constructed as described above, the second filter 3 is defined by a cylindrical shell 9 to provide an exhaust gas passage 31 along the peripheral area inside the filter 3. An outer cover 20 surrounds the cylindrical shell 9 to form a warm-up gas jacket 33 between them so that the warm-up gas jacket 33 envelopes therein the exhaust gas passage 31 in the filter 3. The warm-up gas jacket 33 communicates with a warm-up gas passage 16 branching off from an exhaust gas outlet pipe 15 at an egress of the filter 3. Provided nearby the branching of warm-up gas passage 16 are control valves 25, 27 that are operated by actuators 26, 28 in accordance with instructions issued from the controller unit 10 to thereby turn over the flow of the exhaust gases between the exhaust gas outlet pipe 15 and the warm-up gas passage 16.

The control valve 27 is arranged at the ingress of the warm gas passage 16 while another control valve 25 is arranged in the exhaust gas outlet pipe 15 at a location downstream of the branching. The control valves 25, 27 are operable so as to allow the exhaust gases to pass through at least either one of the exhaust gas outlet pipe 15 and the warm gas passage 16 in accordance with the instructions of the controller unit 10. When the exhaust gases have a temperature higher than a preselected temperature level, no warmup of the filter 3 may be necessary and, therefore, the controller unit 10 renders the control valve 27 close while another valve 25 open, thereby discharging the exhaust gases into the air through the exhaust gas outlet pipe 15. In contract, when the exhaust gases are below the preselected temperature, the controller unit 10 closes the control valve 25 and opens the control valve 27 so that the exhaust gases is allowed to flow through the warm-up gas passage 16 into the warm-up gas jacket 33 to heat the filter 3, finally going out in the air past an exhaust gas outlet line 18.

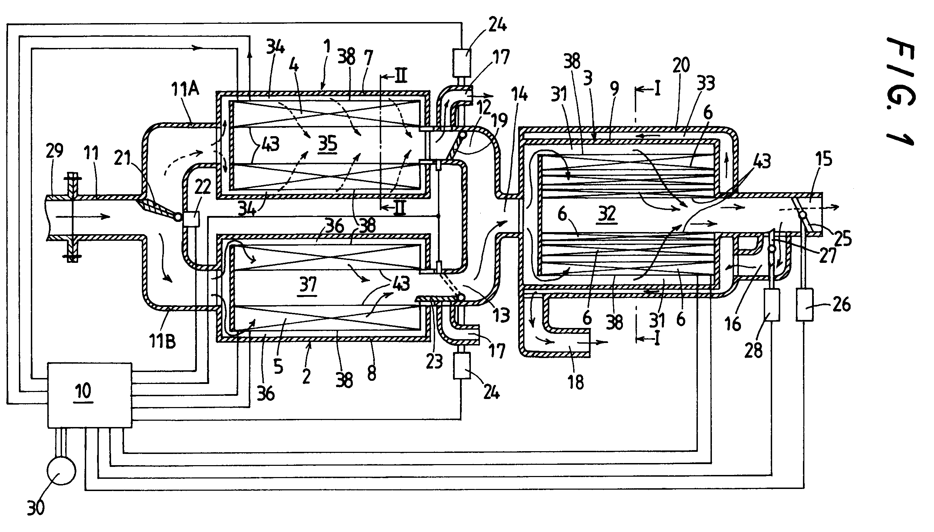

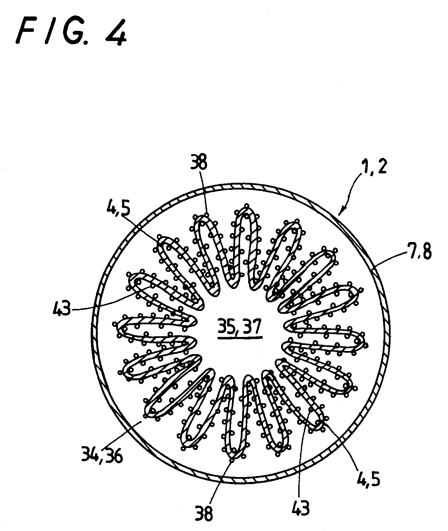

The first filters 1, 2 are each composed of cylindrical filter media 4 or 5, wire nets 38 or 43 disposed on the opposite surfaces of the filter media 4 or 5, and cylindrical cases 7 or 8 accommodating therein the combined filter media 4 or 5 and wire nets 38 or 43. The cylindrical filter media 4, 5 are provided by curling fibrous laminates that have previously folded in bellows. The exhaust gases are passed across the filter media 4, 5 from annular passages 34, 36 outside the cylindrical filter media 4, 5 to central passages 35, 37 inside the filter media 4, 5, as shown by arrows in FIG. 1. The filter media 4, 5 are made of ceramic fibers entangled randomly. The wire nets 38 on the opposite surfaces of the cylindrical filter media 4, 5 constitute the electric heaters that may be turned conductive by the controller unit 10 to burn away the particulate matter accumulated on the filter media 4, 5. Although but the cylindrical filter media 4, 5 are shown in a single layer in FIG. 4, it will be appreciated that any number of layers may be used.

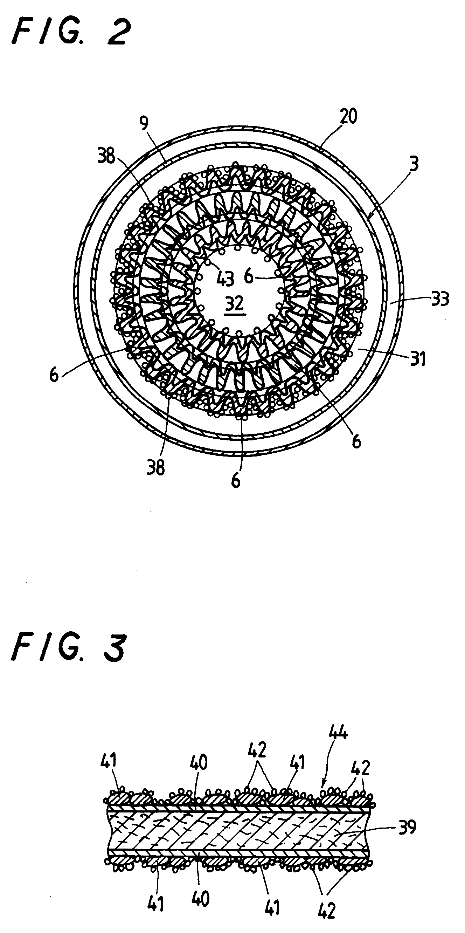

The second filter 3 comprises a cylindrical filter medium 6 made of fibrous laminates folded in bellows, wire nets 38, 43 arranged on either one or both of the opposite surfaces of the cylindrical filter medium 6, and a cylindrical shell 9 receiving therein the combined filter medium 6 and wire nets 38, 43.
Likewise with the first filters 1, 2, the exhaust gases are passed across the filter medium 6 from annular passages 31 outside the cylindrical filter medium 6 to central passage 32 inside the filter medium 6, as shown by arrows in FIG. 2. It will be preferred that the second filter 3 has plural filter media 6 arranged in concentric relationship. In the embodiment in FIG. 3, the cylindrical filter media 6 are shown arranged in a triple-layered structure. Moreover, the wire net 38 is arranged on the outer periphery of the radially outermost filter medium, whereas another wire net 43 is on the inner surface of the radially innermost filter medium. The wire nets 38, 43 on the cylindrical filter media 6 constitute the electric heaters that may be turned conductive by the controller unit 10 to burn away the particulate matter accumulated on the filter media 6.

The filter medium 6 for the second filter 3 is, as shown in FIG. 3, composed of coated fibers 44, each of which is made of a ceramic fiber 39 coated with a compound 41 of brownmillerite-like structure, which may catalyze the decomposition of nitrogen oxides (NOx). As seen in detail in FIG. 3, the coated fibers 44 are formed by adhering a thin film 40 of vitreous composite of Al₂O₃, Y₂O₃, SO₂, B or the like around the ceramic fiber 39 and covering the vitreous film 40 with powdery mixture of the compound 41 of brownmillerite-like structure with powdered noble metals of Rh, Ir, Pt, Au Pd and the others. Among compounds of brownmillerite-like structure, Rh-addition type is more effective in decomposition of nitrogen oxides (NOx) compared with the Ir-addition type. Moreover, the second filter 3 may be provided upstream with sheet filters that is impregnated with calcium salt or barium salt to absorb or solidify sulfur oxides (SOx).

For example, exhaust gases as shown in FIG. 1 are passed through either of the first filters, or filter 2, where the particulate emissions such as carbons, smokes, hydrocarbons (HC), sulfur oxides (SOx) and others in the exhaust are trapped. On the other hand, no exhaust gases passes through another filter 1, where the trapped particulate-emissions are burned. Upon this event, the actuator 24 operates the by-pass valve 19 associated with the filter 1 to block the outlet 17 while the by-pass valve 23 to open the outlet 17 for discharging the gas caused by burning the trapped particulate emissions. As the controller unit 10 renders the wire nets 38 of the heater conductive, the trapped particulate emissions are burned and decomposed with the evolution of sulfur oxides (SOx), which will be discharged separately from the exhaust gases. The catalytic dompound 41 of brownmillerite-like structure in the second filter 3 might otherwise be rendered ineffective by the evolved sulfur oxides (SOx) when they pass through the downstream filter 3.

In accordance with the exhaust gas emission-control system constructed as described above, only the exhaust gases freed of the trapped particulate matter is allowed to pass through the downstream filter 3, where nitrogen oxides (NOx) is catalyzed. Thus, the exhaust gases discharged into the air are free of not only particulate emissions but also nitrogen oxides. Moreover, the gas resulting from burning the trapped particulate matter to regenerate the filter media is not allowed to pass through the downstream filter, but discharged immediately out of the system. Thus, the filter 3 is protected from deterioration due to sulfur oxides (SOx). In addition, when the temperature of the exhaust gases becomes low, the compound of brownmillerite-like structure cannot catalyze effectively to decompose nitrogen oxides (NOx). To cope with this, the present invention discloses to warm up the filter 3 with the exhaust gases that flow around the filter 3.

It should be understood that the foregoing relates to only preferred embodiments of the present invention, and that is intended to cover all changes and modifications of the examples of the invention herein chosen for the purposes of the disclosure, which do not constitute departure from the scope of the invention.

## Claims

1. An exhaust gas emission-control system comprising: a pair of first filters(1,2) incorporated in an exhaust passage of a diesel engine in parallel with each other to extract particulate matter from the exhaust gases; heating means(38) provided in the first filters(1,2) to burn the particulate matter trapped in the first filters(1,2); a change-over valve(21) to allow the exhaust gases to pass through selectively either one of the first filters(1,2); by-pass valves (19,23) arranged in egress ports(12,13) of the first filters(1,2), one to each egress port(12,13), to discharge a gas caused by burning the trapped particulate matter to regenerate the first filters(1,2); a second filter(3) to decompose therein nitrogen oxides (NOx) in the exhaust gases, which is communicated with an exhaust passage(14) where the egress ports(12,13) of the first filters(1,2) merge into a single flow of the exhaust gases; and means for controlling operations(10) of the change-over valve(21), heating means and by-pass valves(19,23) in accordance with amounts of the trapped particulate matter in the first filters(1,2).

2. An exhaust gas emission-control system constructed as defined in claim 1, wherein a warm-up gas jacket(16,33) is provided around the second filter (3), the warm-up gas jacket(16,33) branching off from an exhaust gas outlet pipe(15) at an egress of the second filter(3), and warm-up valves(25,27) are provided nearby the branching of the warm-up gas jacket (16,33) to control a flow of the exhaust gases to the warm-up gas jacket(16,33) in accordance with the control means(10).

3. An exhaust gas emission-control system constructed as defined in claim 2, wherein the warm-up valves(25,27) are provided at ingress of the warm-up gas jacket(16,33) and in the exhaust gas outlet pipe(15) at a location downstream of the branching of the warm-upgas jacket(16,33), and the warm-up valves(25,27) are operable so as to allow the exhaust gases to pass through at least either one of the warm-up gas jacket (16,33) and the exhaust gas outlet pipe(15).

4. An exhaust gas emission-control system constructed as defined in claim 2, wherein the control means(10) operates the warm-up valves(25,27) so as to let the exhaust gases pass through the exhaust gas outlet pipe(15) when a temperature of the exhaust gases is above a preselected temperature.

5. An exhaust gas emission-control system constructed as defined in claim 1, wherein the first filters(1,2) include ceramic fibers entangled randomly.

6. An exhaust gas emission-control system constructed as defined in claim 1, wherein the second filter(3) includes coated fibers entangled randomly, the coated fibers being made of ceramic fibers that are coated with a catalytic compound of brownmillerite-like structure to decompose nitrogen oxides (NOx).

7. An exhaust gas emission-control system constructed as defined in claim 6, wherein the coated fibers each include powdery mixture of the compound of brownmillerite-like structure with any noble metal selected from Pt, Rh, Au, Pd and Ir, the mixture being applied on a thin film of vitreous composite selected from the group of A1203, Y203, SO₂ and B.

8. An exhaust gas emission-control system constructed as defined in claim 1, wherein the first and second filters(1,2,3) are composed of cylindrical filter media(4,5) formed by curling fibrous laminates that have previously folded in bellows, wire nets(38,43) disposed on at least any one surface of the filter media(4,5), and cylindrical cases(7,8) accommodating therein the combined filter media(4,5) and wire nets(38, 43), and wherein the exhaust gases are passed across the filter media(4,5) from a radially outwardly areas in the cylindrical case(7,8) toward central area inside the filter media(4,5).

9. An exhaust gas emission-control system constructed as defined in claim 8, wherein the cylindrical filter media(4,5) are arranged in concentric relation with one another.

10. An exhaust gas emission-control system constructed as defined in claim 8, wherein an exhaust gas emission-control system constructed as defined in claim 8, wherein the wire nets(38,43) arranged on the cylindrical filter media(4,5) is made electric conduction by the control means(10) to burn the trapped particulate matter on the filter media(4,5).

11. An exhaust gas emission-control system constructed as defined in claim 1, wherein the by-pass valves(19,23) do not allow the gas evolved, upon burning the trapped particulate matter on the filter media(4,5) to regenerate the filter media(4,5) in the first filters(1,2), to pass through the second filter (3), but discharge the gas into the air.
